# EUROPÄISCHE PATENTSCHRIFT

(11) **EP 1 883 666 B1**
(45) Veröffentlichungstag und Bekanntmachung des Hinweises auf die Patenterteilung: **08.07.2009**
(21) Anmeldenummer: 06742881.3
(22) Anmeldetag: 11.05.2006
(51) Int. Cl.: C08G 77/08, C08G 77/16

(54) **VERFAHREN ZUR HERSTELLUNG VON DIORGANOPOLYSILOXANEN**
PROCESS FOR PREPARING DIORGANOPOLYSILOXANES
PROCEDE DE PRODUCTION DE DIORGANOPOLYSILOXANES

(30) Priorität: 18.05.2005 DE 102005022856
(43) Veröffentlichungstag der Anmeldung: 06.02.2008
(73) Patentinhaber: Wacker Chemie AG, 81737 München (DE)
(72) Erfinder: SCHÄFER, Oliver, 84489 Burghausen (DE); BACHMAIER, Sandra, A-5142 Egglsberg (AT)
(74) Vertreter: Deffner-Lehner, Maria
(86) Internationale Anmeldenummer: PCT/EP2006/004449
(87) Internationale Veröffentlichungsnummer: WO 2006/122704

(56) Entgegenhaltungen:
- EP-A- 1 369 449
- DE-A1- 4 116 014

## Beschreibung

Die Erfindung betrifft ein Verfahren zur Herstellung von Diorganopolysiloxanen, die lediglich an einem Molekülkettenende eine Si-gebundene Hydroxylgruppe aufweisen.

Aus US 3,445,426 A ist die Polymerisation von Hexaorganocyclotrisiloxan in Gegenwart von katalytischen Mengen eines fünffach koordinierten Siliciumkatalysators, eines Alkali-, Ammonium- oder Phosphoniumsiliconats bekannt. Die Katalysatoren haben aber den Nachteil, dass sie aufwändig herzustellen und sehr feuchtigkeitsempfindlich sind. Als Starter für die Ringöffnungspolymerisation wird Alkohol in Kombination mit Wasser beschrieben, was stets zu Polymergemischen, also zu OH-endständigen Polymeren und monoalkoxy-endständigen Polymeren, führt.

In EP 0 331 753 A1 ist die Polymerisation von Hexaorganocyclotrisiloxanen in Gegenwart von Sil(ox)anolen und mit Hilfe von Alkalisil(ox)anolaten als Polymerisationsinitiatoren beschrieben. Alkalisil(ox)anolate weisen ebenfalls eine Feuchtigkeitsempfindlichkeit auf. Hierbei werden als Katalysatoren metallorganische Verbindungen verwendet, welche wie erwähnt eine extreme Feuchtigkeitsempfindlichkeit besitzen.

Aus EP 0 338 577 A2 ist die Polymerisation von Hexamethylcyclotrisiloxan in Gegenwart von Trialkylsilanol und eines Lithium-Katalysators, wie Butyllithium, bekannt. Der Einsatz von metallorganischen Verbindungen ist jedoch sicherheitstechnisch problematisch.

In L.M. Tartakovskaya et al., Vysokomol. Soedin. Ser. B 26 234, 1984 (Chemical Abstracts Vol. 101, 73186d, 1984) ist die Ringöffnung und Polymerisation von cyclischen Siloxanen in Gegenwart von Fluorid-Ionen beschrieben. Diese Katalysatoren sind aufgrund Ihrer Toxizität im technischen Einsatz als nachteilig zu beurteilen.

In DE 41 16 014 A1 wird die Polymerisation von cyclischen Siloxanen mit Fluorid-Ionen enthaltenen Katalysatoren beschrieben. Diese Fluorid-Katalysatoren haben jedoch den Nachteil der Nebenreaktionen mit Siloxanen unter Bildung von Si-F-Einheiten. Zudem zeigen sie Toxizität auch der geträgerten Vertreter, die einen technischen Einsatz erschweren.

Aus EP 1 369 449 A1 ist die Polymerisation von cyclischen Siloxanen mit Alkoholen als Initiator unter Verwendung von Carbonat-Salzen als Katalysatoren beschrieben. Diese so erhaltenen Verbindungen haben jedoch den Nachteil der Bildung einer Alkoxy-Silizium-Endgruppe, welche nicht lagerstabil ist. Diese kann beispielsweise mit der ebenfalls vorhandenen Silanol-Verbindung unter Abspaltung des Alkohols reagieren und so zur Kettenverlängerung führen.

Die gegenwärtigen Verfahren haben daher insgesamt den Nachteil entweder zu nicht stabilen Produkten zu führen oder aber sicherheitstechnisch problematische Edukte beziehungsweise Katalysatoren zu verwenden.

Der vorliegenden Erfindung liegt daher die Aufgabe zugrunde ein Verfahren zur Herstellung von Diorgano(poly)siloxane, die lediglich an einem Molekülkettenende eine Si-gebundene Hydroxylgruppe aufweisen, bereitzustellen, das zu lagerstabilen Produkten führt, die gegebenenfalls weiter funktionalisiert werden können. Dabei sollen unempfindliche, leicht zugängliche und sicherheitstechnisch unproblematischere Edukte eingesetzt werden.

Diese Aufgabe konnte überraschend durch das erfindungsgemäße Verfahren gelöst werden. Gegenstand der Erfindung ist daher ein Verfahren zur Herstellung von Diorgano(poly)siloxanen der allgemeinen Formel (I)

R¹R₂Si (OSiR₂)ₘ(OSiR²₂)ₙOH (I) ,

durch Umsetzung von Hexaorganocyclotrisiloxan der allgemeinen Formel (II)

(R²₂SiO)₃ (II)

mit Sil(ox)anol der allgemeinen Formel (III)

R¹R₂Si (OSiR₂)ₘOH (III)

in Gegenwart eines Katalysators und
gegebenenfalls weiteren Zusatzstoffen, ausgewählt aus der Gruppe enthaltend Trockenmittel, Lösungsmittel, Phasentransferkatalysatoren, Lithiumverbindungen oder deren Mischungen,
wobei
- R: unabhängig voneinander, einen einwertigen, gegebenenfalls substituierten C₁-C₁₃-Kohlenwasserstoffrest,
- R¹: ein Wasserstoffatom oder einen gegebenenfalls substituierten C₁-C₁₃-Kohlenwasserstoffrest,
- R²: unabhängig voneinander, einen einwertigen, gegebenenfalls substituierten C₁-C₁₃-Kohlenwasserstoffrest,
- m: 0 oder eine ganze Zahl von mindestens 1 bis 3 und
- n: eine ganze Zahl von mindestens 3 bis 1000
bedeutet,
dadurch gekennzeichnet, dass die eingesetzten Sil(ox)anole der allgemeinen Formel (III) einen Wassergehalt von unter 1 Gew.-% besitzen.

Vorzugsweise bedeutet m eine 0, 1, 2 oder 3.

Vorzugsweise bedeutet n eine ganze Zahl von 3 bis 999, besonders bevorzugt von 9 bis 150.

Beispiele für Kohlenwasserstoffreste R sind Alkylreste, wie der Methyl-, Ethyl-, n-Propyl-, iso-Propyl-, n-Butyl-, iso- Butyl-, tert. -Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest, und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der alpha - und der beta -Phenylethylrest.

Beispiele für substituierte Kohlenwasserstoffreste R sind Halogenalkylreste, wie der 3,3,3-Trifluor-n-propylrest, 2,2,2,2 min ,2 min ,2 min -Hexafluorisopropylrest, der Heptafluorisopropylrest; Halogenarylreste, wie der o-, m- und p-Chlorphenylrest; und Acyloxyalkylreste, wie der Acetoxyethylrest und (Meth)acryloxypropylrest.

Die oben aufgeführten Beispiele für Kohlenwasserstoffreste R und substituierte Kohlenwasserstoffreste R gelten im vollen Umfang auch für Kohlenwasserstoffreste R¹ sowie R² und substituierte Kohlenwasserstoffreste R¹ sowie R².

Bevorzugt bedeutet R ein Alkylrest, besonders bevorzugt ein Methylrest.

Bevorzugt bedeutet R¹ ein Wasserstoffatom, Alkylrest, Alkenylrest oder substituierter Kohlenwasserstoffrest, besonders bevorzugt ein Methyl-, Vinyl-, Allyl- oder (Meth)acryloxypropylrest.

Bevorzugt bedeutet R² ein Alkylrest, besonders bevorzugt ein Methylrest.

Beispiele für die bevorzugten, erfindungsgemäßen Diorgano(poly)siloxane der allgemeinen Formel (I) sind solche der folgenden Formeln:

Me₃Si (OSiMe₂)ₘ(OSiMe₂)ₙOH

HMe₂Si (OSiMe₂)ₘ(OSiMe₂)ₙOH

(H₂C=CH)Me₂Si (OSiMe₂)ₘ(OSiMe₂)ₙOH

(H₂C₌CH-CH₂)Me₂Si(OSiMe₂)ₘ(OSiMe2)ₙOH

(CF₃CH₂CH₂) Me₂Si (OSiMe₂)ₘ(OSiMe₂)ₙOH

H₂C=CHC (O) O (CH₂)₃Me₂Si (OSiMe₂)ₘ (OSiMe₂) ₙOH

H₂C=C (Me) C (O) O (CH₂) ₃Me₂Si (OSiMe₂)ₘ (OSiMe₂)ₙOH

wobei Me ein Methylrest ist und m und n die oben angegebene Bedeutung haben.

Die erfindungsgemäßen Diorgano(poly)siloxane der allgemeinen Formel (I) zeigen eine Viskosität von vorzugsweise 4 bis 9•10⁵ mPa.s bei 25°C.

Beispiele für die beim erfindungsgemäßen Verfahren eingesetzten Hexaorganocylotrisiloxane, der allgemeinen Formel (II), sind Hexamethylcyclotrisiloxan, Hexaethylcyclotrisiloxan, 1,3,5-Trimethyl-1,3,5-triethylcyclo-2,4,6-trisiloxan, 1,3,5-Trimethyl-1,3,5-triphenylcyclo-2,4,6-trisiloxan und 1,3,5-Trimethyl-1,3,5-tris(3,3,3-trifluorpropyl)cyclo-2,4,6-trisiloxan. Bei dem erfindungsgemäßen Verfahren wird als Hexaorganocyclotrisiloxan der allgemeinen Formel (II) bevorzugt Hexamethylcyclotrisiloxan eingesetzt.

Das bei dem erfindungsgemäßen Verfahren eingesetzte Verhältnis von Hexaorganocyclotrisiloxan der allgemeinen Formel (II) zu Silanol der allgemeinen Formel (III) bestimmt die mittlere Kettenlänge des Produkts.

Hexaorganocyclotrisiloxan der allgemeinen Formel (II) wird vorzugsweise in Mengen von 1 bis 333 Mol, bevorzugt in Mengen von 1 bis 70 Mol, jeweils bezogen auf 1 Mol Silanol (III) eingesetzt.

Die Triorganosiloxygruppe am Molekülkettenende des bei dem erfindungsgemäßen Verfahren hergestellten Diorgano(poly)siloxans der allgemeinen Formel (I) wird über das eingesetzte Sil(ox)anol der allgemeinen Formel (III) eingeführt.

Als Siloxanol der allgemeinen Formel (III) wird vorzugsweise Triorganosilanol, besonders bevorzugt Trimethylsilanol oder Vinyldimethylsilanol, eingesetzt. Die Einführung beispielsweise der Vinyldimethylsiloxy- oder Perfluoralkyldimethylsiloxygruppe kann aufgrund der Instabilität der entsprechenden Sil(ox)anole über oligomere- oder polymere Sil(ox)anole erfolgen. Tetrasiloxanole sind dabei über die Umsetzung von Hexaorganocyclotrisiloxan mit dem entsprechenden Chlorsilan leicht zugänglich. Dies wird beispielsweise in DE 29 18 312 A1 beschrieben, deren diesbezügliche Offenbarung auch Gegenstand dieser Anmeldung sein soll. Ein Beispiel für ein solches Siloxanol ist alpha-Hydroxy-omega-Vinyldimethylsiloxyhexamethyltrisiloxan.

Durch Kondensation des eingesetzten Sil(ox)anols der allgemeinen Formel (III) während der Reaktion oder bei der Lagerung entstandene Disiloxane oder Polysiloxane stören den Verlauf der Reaktion nicht.

Die eingesetzten Sil(ox)anole der allgemeinen Formel (III) sollten bevorzugt einen Wassergehalt von unter 1 Ges.-% besitzen. Ganz besonders bevorzugt ist ein Wassergehalt von unter 0,5 Gew.-%. Hierfür muss das Sil(ox)anol der allgemeinen Formel (III) gegebenenfalls getrocknet oder destillativ aufgereinigt werden, um Wasserspuren zu entfernen, welche bei der Polymerisation zu unerwünschten bifunktionellen Nebenprodukten führen.

Bei dem erfindungsgemäßen Verfahren wird als Katalysator ein Erdalkali- und/oder Alkalimetallcarbonat, Erdalkali- und/oder Alkalimetalloxid, ein an ein Trägermaterial gebundenes Erdalkali- oder Alkalimetallcarbonat, ein an ein Trägermaterial gebundenes Erdalkali- oder Alkalimetalloxid oder ein Gemisch aus mindestens zwei der vorgenannten Verbindungen eingesetzt.

Beispiele für Erdalkali- und Alkalimetallcarbonate sind Lithiumcarbonat, Natriumcarbonat, Magnesiumcarbonat, Kalziumcarbonat, Kaliumcarbonat und Cäsiumcarbonat, wobei Kaliumcarbonat bevorzugt ist. Erdalkali- und Alkalimetalloxid sind beispielsweise Lithiumoxid, Natriumoxid oder Kaliumoxid.

Beispiele für Trägermaterial sind Aluminiumoxide, Titandioxide, Zirkoniumoxide, Zeolithe, Kieselgele, Diatomeenerden und Ionenaustauscherharze, wobei Aluminiumoxide bevorzugt sind.

Besonders bevorzugt wird bei dem erfindungsgemäßen Verfahren Kaliumcarbonat, insbesondere an Aluminiumoxid gebundenes Kaliumcarbonat, eingesetzt.

An Trägermaterial gebundenes Kaliumcarbonat wird beispielsweise durch Eindampfen einer Mischung aus Aluminiumoxid und Kaliumcarbonat in Wasser, durch Trocknung einer trocken miteinander verriebenen Mischung aus Aluminiumoxid und Kaliumcarbonat, oder durch Hydrolyse von Aluminiumtriisopropylat, Zirkoniumtetraisopropylat oder Titantetraisopropylat in Gegenwart von Kaliumcarbonat hergestellt.

Bevorzugt wird der Katalysator in getrockneter Form eingesetzt.

Bei dem erfindungsgemäßen Verfahren wird der Katalysator in Mengen von vorzugsweise 0,01 - 5 Gew.-%, bevorzugt 0,1 bis 0,5 Gew.-%, jeweils bezogen auf das Gesamtgewicht des eingesetzten Hexaorganocyclotrisiloxans, eingesetzt. Bevorzugt wird der Katalysator zum Abbruch der Reaktion abfiltriert.

Zur Erhöhung der katalytischen Selektivität und des Umsatzes kann als Cokatalysator gegebenenfalls noch eine Lithiumverbindung, bevorzugt ein Lithiumsalz, ganz besonders bevorzugt ein anorganisches Lithiumsalz verwendet werden. Beispiele hierfür sind Lithiumcarbonat, Lithiumchlorid, Lithiumbromid, Lithiumsulfat. Der Katalysator beziehungsweise das Katalysatorgemisch liegt zur Erreichung eines möglichst hohen Oberflächen/Volumen - Verhältnisses in Pulverform vor. Bevorzugt sind dabei Korngrößen von kleiner als 1 Millimeter, ganz besonders bevorzugt von kleiner als 500 Mikrometer.

Ebenfalls zur Erhöhung der Selektivität der Reaktion kann das erfindungsgemäße Verfahren in Gegenwart von polarem, aprotischem organischem Lösungsmittel, gegebenenfalls im Gemisch mit einem unpolaren Lösungsmittel durchgeführt werden. Beispiele für polare, aprotische organische Lösungsmittel sind Aceton, Methyl-isobutylketon (MIBK), Methylethylketon (MEK), Dimethylformamid, Dimethylsulfoxid, Acetonitril, Tetrahydrofuran, Diethylether, Dibutylether, Methyltbutylether, Diethylenglykoldimethylether, Polyethylenglykoldimethylether, Essigsäure-n-butylester und Essigsäureethylester. Beispiele für unpolare Lösungsmittel sind Toluol, Xylol, Cyclohexan, Methylcyclohexan, Heptan und Siloxane wie Octamethylcyclotetrasiloxan, Decamethylcyclopentasiloxan, Hexamethyldisiloxan oder Octamethyltrisiloxan.

Polares, aprotisches organisches Lösungsmittel wird je nach Art des eingesetzten Carbonat-Ionen aufweisenden Katalysators vorzugsweise in Mengen von 0 bis 50 Gew.-%, bevorzugt 5 bis 30 Gew.-%, besonders bevorzugt 5 bis 20 Gew.-%, jeweils bezogen auf das Gesamtgewicht aus Silanol und Hexaorganocyclotrisiloxan, eingesetzt.

Unpolares organisches Lösungsmittel kann zur besseren Homogenisierung der Reaktionsmischung in Mengen von 0 bis 80 Gew.-%, vorzugsweise 50 bis 70 Gew.-%, jeweils bezogen auf das Gesamtgewicht aus Silanol und Hexaorganocyclotrisiloxan, eingesetzt werden.

Zur Erhöhung der Selektivität und/oder Geschwindigkeit der Reaktion können bei dem erfindungsgemäßen Verfahren Gemische verschiedener Lösungsmittel eingesetzt werden.

Das Lösungsmittel wird in der Regel nach beendeter Reaktion durch Abdestillieren entfernt. Falls das erfindungsgemäße Polysiloxan in Lösung weiterverarbeitet werden soll, kann die Entfernung des Lösungsmittels jedoch entfallen. Je nach Verwendungszweck können in diesem Fall auch hochsiedende, destillativ nicht mehr abtrennbare Flüssigkeiten wie Polydimethylsiloxane als Lösungsmittel eingesetzt werden.

Zur Erhöhung der Selektivität und/oder Geschwindigkeit der Reaktion können bei dem erfindungsgemäßen Verfahren Phasentransferkatalysatoren aus der Gruppe der quaternären Ammoniumsalze, wie Benzyltriethylammoniumchlorid, Kronenether, wie beispielsweise 18-Krone-6, 1,4,7,10,13-Hexaoxacyclooctadecan oder Polyethylenglykoldimethylether, oder tertiäre Amine, wie 4-Dimethylaminopyridin, N,N-Dimethylcyclohexylamin oder 1,4-Diazabicyclo[2,2,2]octan mitverwendet werden.

Zum Ausschluss von Feuchtigkeitsspuren kann es zweckmäßig sein Trocknungsmittel, wie Zeolithe, wasserfreies Natriumsulfat oder wasserfreies Magnesiumsulfat bei dem erfindungsgemäßen Verfahren mitzuverwenden.

Das erfindungsgemäße Verfahren wird vorzugsweise bei einer Temperatur, die oberhalb der Schmelztemperatur der eingesetzten Reaktionspartner liegt, bevorzugt bei einer Temperatur von 40°C bis 120°C durchgeführt. Bei Verwendung von Lösungsmitteln wird die Reaktion bevorzugt bei 60°C bis 110°C durchgeführt. Die Reaktion kann bis zum vollständigen Umsatz des Hexaorganocyclotrisiloxans durchgeführt werden, aber auch vor Erreichen des 100%-igen Umsatzes abgebrochen werden.

Das erfindungsgemäße Verfahren wird bei Normaldruck, Unterdruck oder Überdruck durchgeführt, vorzugsweise bei einem Druck der umgebenden Atmosphäre, also etwa bei 1020 hPa absolut.

Die Reaktionszeit beträgt bei dem erfindungsgemäßen Verfahren je nach Reaktionstemperatur, Art und Menge der eingesetzten Reaktionspartner und Lösungsmittel vorzugsweise 0,25 bis 48 Stunden. Ein Abbruch der Reaktion bei unvollständigem Umsatz ist durch Abkühlen auf Raumtemperatur und/oder Abfiltrieren des Katalysators möglich. Weiterhin ist ein Abbruch der Reaktion durch Zugabe einer Säure, wie Essigsäure, Ameisensäure, 2-Ethylhexansäure oder Phosphorsäure möglich.

Das erfindungsgemäße Verfahren zeigt folgende Vorteile gegenüber dem Stand der Technik. Zum einen ist der eingesetzte Katalysator einfach und leicht herstellbar beziehungsweise kommerziell erhältlich und unproblematisch in seiner Handhabung, beispielsweise an Luft. Die Herstellung der erfindungsgemäßen Diorgano(poly)siloxane der allgemeinen Formel (I) mit dem erfindungsgemäßen Katalysator, hat den weiteren Vorteil, dass der als Feststoff eingesetzte Katalysator leicht aus der Reaktionsmischung abgetrennt werden kann, beispielsweise durch einfaches Filtrieren. Weiterhin zeigen die erfindungsgemäß hergestellten Diorgano(poly)siloxane der allgemeinen Formel (I) gute Lagerstabilität.

Die erfindungsgemäß hergestellten Diorgano(poly)siloxane der allgemeinen Formel (I) können anschließend mit geeigneten Organosilanen weiter funktionalisiert werden, wie es beispielsweise in DE 100 51 886 C1, DE 103 03 693 A1, DE 102 19 734 A1 oder DE 101 09 842 A1 beschrieben ist, deren diesbezügliche Offenbarung auch Gegenstand dieser Anmeldung sein soll. Die nach dem erfindungsgemäßen Verfahren hergestellten Diorgano(poly)siloxane der allgemeinen Formel (I) werden nach einer Funktionalisierung mit geeigneten organischen Gruppen bevorzugt mit weiteren organischen Polymeren, beispielsweise Butylacrylaten, zu Copolymeren umgesetzt, und beispielsweise als Lackhilfsstoffe verwendet.

### Beispiele

Die nachfolgenden Beispiele beschreiben die prinzipielle Ausführbarkeit der vorliegenden Erfindung, ohne jedoch diese auf die darin offenbarten Inhalte zu beschränken.

### Beispiel 1: Herstellung des geträgerten Katalysators

10,1 g (0,1 mol) Aluminiumoxid (bezogen bei Merck KGaA, Darmstadt, Deutschland) werden mit 6,9 g (0,1 mol) wasserfreiem Kaliumcarbonat (bezogen bei Merck KGaA, Darmstadt, Deutschland) vermischt, gemahlen, und 24 Stunden bei 200°C getempert. Das Pulver wird in einer verschlossenen Glasflasche gelagert.

### Beispiel 2:

Eine Mischung von 222 g (1 mol) Hexamethylcyclotrisiloxan wird bei 60°C in 80 g Methylethylketon p.a. (bezogen bei Merck KGaA, Darmstadt, Deutschland) aufgeheizt und mit 1 g Katalysator aus Beispiel 1 versetzt. Anschließend werden 30 g (0,33 mol) Trimethylsilanol (Wassergehalt 0,45%) zugegeben. Es wird vier Stunden bei 60°C gerührt, über Kieselgel 60 (bezogen bei Merck KGaA, Darmstadt, Deutschland) filtriert, und das Filtrat am Rotationsverdampfer bei 40°C und 5 mbar eingeengt. Es werden 241,6 g eines klaren, farblosen Öls erhalten, welches nach den Ergebnissen des ²⁹Si-NMR-Spektrums und des MALDI-TOF-Massenspektrums einem Silicon der folgenden Formel entspricht: (CH₃)₃Si-[OSi(CH₃)₂]₉-OH. Das Verhältnis der Si-OH und Me₃Si-Endgruppen beträgt laut NMR 1 : 1.
Das Endgruppenverhältnis blieb über den Beobachtungszeitraum von 4 Monaten konstant. Der Gehalt an Octamethylcyclotetrasiloxan betrug 4.2 Gew.-%.

### Beispiel 3: Durchführung analog zu Beispiel 2

Eine Mischung von 666 g (3 mol) Hexamethylcyclotrisiloxan wird bei 60°C in 200 g Methylethylketon p.a. (bezogen bei Merck KGaA, Darmstadt, Deutschland) aufgeheizt und mit 1 g bei 200°C getrocknetem Kaliumcarbonat versetzt. Anschließend werden 30 g (0,33 mol) Trimethylsilanol (Wassergehalt 0.45%) zugegeben. Es wird vier Stunden bei 60°C gerührt, über Kieselgel 60 (bezogen bei Merck KGaA, Darmstadt, Deutschland) filtriert, und das Filtrat am Rotationsverdampfer bei 40°C und 5 mbar eingeengt. Es werden 648 g eines klaren, farblosen Öls erhalten, welches nach den Ergebnissen des ²⁹Si-NMR-Spektrums und des MALDI-TOF-Massenspektrums einem Silicon der folgenden Formel entspricht: (cH₃)₃Si-[OSi(CH₃)₂]₂₇-OH. Das Verhältnis der Si-OH und Me₃Si-Endgruppen beträgt laut NMR 1 : 1.

Das Endgruppenverhältnis blieb über den Beobachtungszeitraum von 4 Monaten konstant.

### Beispiel 4:

Eine Mischung von 666 g (3 mol) Hexamethylcyclotrisiloxan wird bei 60°C in 200 g Methylethylketon p.a. (bezogen bei Merck KGaA, Darmstadt, Deutschland) aufgeheizt und mit 1 g bei 200°C getrocknetem Kaliumcarbonat versetzt. Anschließend werden 30 g (0,33 mol) Trimethylsilanol (Wassergehalt 1.35%) zugegeben. Es wird vier Stunden bei 60°C gerührt, über Kieselgel 60 (bezogen bei Merck KGaA, Darmstadt, Deutschland) filtriert, und das Filtrat am Rotationsverdampfer bei 40°C und 5 mbar eingeengt. Es werden 648 g eines klaren, farblosen Öls erhalten, welches nach den Ergebnissen des ²⁹Si-NMR-Spektrums einer Siliconmischung der folgenden Formel entspricht: (CH₃)₃Si-[OSi(CH₃)₂]ₙ-OH / H-(OSi(CH₃)₂]ₘ-OH. Das Verhältnis der Si-OH und Me₃Si-Endgruppen beträgt laut NMR 1,1 : 1. Der erhöhte Wassergehalt des Trimethylsilanols führt zu einer erhöhten Menge an difunktionellen Produkten.
Das Endgruppenverhältnis blieb über den Beobachtungszeitraum von 4 Monaten konstant.

### Beispiel 5:

Eine Mischung von 222 g (1 mol) Hexamethylcyclotrisiloxan wird bei 60°C in 80 g Methylethylketon p.a. (bezogen bei Merck KGaA, Darmstadt, Deutschland) aufgeheizt und mit 1 g Katalysator aus Beispiel 1 versetzt. Zusätzlich werden noch 0.6 g getrocknetes Lithiumchlorid hinzugegeben. Anschließend werden 30 g (0,33 mol) Trimethylsilanol (Wassergehalt 0,45%) zugegeben. Es wird vier Stunden bei 60°C gerührt, über Kieselgel 60 (bezogen bei Merck KGaA, Darmstadt, Deutschland) filtriert, und das Filtrat am Rotationsverdampfer bei 40°C und 5 mbar eingeengt. Es werden 241,6 g eines klaren, farblosen Öls erhalten, welches nach den Ergebnissen des ²⁹Si-NMR-Spektrums und des MALDI-TOF-Massenspektrums einem Silicon der folgenden Formel entspricht: (CH₃)₃Si-[OSi(CH₃)₂]₉-OH. Das Verhältnis der Si-OH und Me₃Si-Endgruppen beträgt laut NMR 1 : 1.
Das Endgruppenverhältnis blieb über den Beobachtungszeitraum von 4 Monaten konstant. Der Gehalt an Octamethylcyclotetrasiloxan betrug 1.2 Gew.-%.

Beispiel 6: Vergleichsbeispiel, nicht erfindungsgemäß, analog zu EP 1 369 449 A1

Eine Mischung von 222 g (1 mol) Hexamethylcyclotrisiloxan, 96,2 g (1,6 mol) 2-Propanol p.a. (bezogen bei Merck KGaA, Darmstadt, Deutschland), und 20 g Molekularsieb 0,4 nm (bezogen bei Merck KGaA, Darmstadt, Deutschland) wird auf 60°C aufgeheizt und mit einer Suspension von 1 g Katalysator (aus Beispiel 1) in 46,4 g ( 0,8 mol) Aceton p.a. (bezogen bei Merck KGaA, Darmstadt, Deutschland) versetzt. Es wird vier Stunden bei 60°C gerührt, über Kieselgel 60 (bezogen bei Merck KGaA, Darmstadt, Deutschland) filtriert, und das Filtrat am Rotationsverdampfer bei 40°C und 5 mbar eingeengt. Es werden 237,3 g eines klaren, farblosen Öls erhalten, welches nach den Ergebnissen des ²⁹Si-NMR-Spektrums und des MALDI-TOF-Massenspektrums einem Silicon der folgenden Formel entspricht: (CH₃)₂CH- [OSi(CH₃)₂]₄₄-OH Das Endgruppenverhältnis betrug 1,0:1,01 und stieg im Laufe der nächsten 2 Wochen auf 1:1,08 (Si-OH : Si-OR) an. Dabei stieg das durchschnittliche Molekulargewicht ebenfalls leicht an.

Die erfindungsgemäßen Beispiele zeigen eindeutig, dass gegenüber dem Stand der Technik mit besonders einfachen Verfahren und sicheren Edukten monofunktionelle Siliconöle hergestellt werden können, welche weiterhin noch lagerstabil sind.

## Patentansprüche

1. Verfahren zur Herstellung von Diorgano(poly)siloxanen der allgemeinen Formel (I)
R¹R₂Si (OSiR₂)ₘ (OSIR²₂)ₙOH (I),
durch Umsetzung von Hexaorganocyclotrisiloxan der allgemeinen Formel (II)
(R²₂SiO)₃ (II)
mit Sil(ox)anol der allgemeinen Formel (III)
R¹R₂Si (OSiR₂)ₘOH (III)
in Gegenwart eines Katalysators und
gegebenenfalls weiteren Zusatzstoffen, ausgewählt aus der Gruppe enthaltend Trockenmittel, Lösungsmittel, Phasentransferkatalysatoren, Lithiumverbindungen oder deren Mischungen,
wobei
R unabhängig voneinander, einen einwertigen, gegebenenfalls substituierten C₁-C₁₃-Kohlenwasserstoffrest,
R¹ ein Wasserstoffatom oder einen gegebenenfalls substituierten C₁-C₁₃-Kohlenwasserstoffrest,
R² unabhängig voneinander, einen einwertigen, gegebenenfalls substituierten C₁-C₁₃-Kohlenwasserstoffrest,
m 0 oder eine ganze Zahl von mindestens 1 bis 3 und
n eine ganze Zahl von mindestens 3 bis 1000
bedeutet,
**dadurch gekennzeichnet, dass** die eingesetzten Sil(ox)anole der allgemeinen Formel (III) einen Wassergehalt von unter 1 Gew.-% besitzen und dass als Katalysator ein Erdalkali-, Alkalimetallcarbonat, Erdalkali-,Alkalimetalloxid oder eine Mischung aus mindestens zwei dieser Verbindungen verwendet wird.

2. Verfahren gemäß Anspruch 1, **dadurch gekennzeichnet, dass** als Katalysator ein an ein Trägermaterial gebundenes Erdalkali- oder Alkalimetallcarbonat verwendet wird.

3. Verfahren gemäß einem der Ansprüche 1 oder 2, **dadurch gekennzeichnet, dass** der Katalysator in getrockneter Form eingesetzt wird.

4. Verfahren gemäß einem der Ansprüche 1 bis 3, **dadurch gekennzeichnet, dass** das Hexaorganocyclotrisiloxan der allgemeinen Formel (II) in Mengen von 1 bis 333 Mol verwendet wird.

5. Verfahren gemäß einem der Ansprüche 1 bis 4, **dadurch gekennzeichnet, dass** als Hexaorganocylotrisiloxan der allgemeinen Formel (II) Hexamethylcyclotrisiloxan verwendet wird.

6. Verfahren gemäß einem der Ansprüche 1 bis 5, **dadurch gekennzeichnet, dass** als weiterer Zusatzstoff ein polares, aprotisches organisches Lösungsmittel verwendet wird.

7. Verfahren gemäß einem der Ansprüche 1 bis 6, **dadurch gekennzeichnet, dass** der Katalysator zur Beendigung der Reaktion abfiltriert wird.

8. Verfahren gemäß einem der Ansprüche 1 bis 7, **dadurch gekennzeichnet, dass** als Cokatalysator eine anorganische Lithiumverbindung zugesetzt wird.

## Claims

1. Process for preparing diorgano(poly)siloxanes of the general formula (I)
R¹R₂Si (OSiR₂)ₘ(OSiR²₂)ₙOH (I),
by reacting hexaorganocyclotrisiloxane of the general formula (II)
(R²₂SiO)₃ (II)
with sil(ox)anol of the general formula (III)
R¹R₂Si(OSiR₂)ₘOH (III)
in the presence of a catalyst and,
if desired, of further additives selected from the group containing driers, solvents, phase transfer catalysts, lithium compounds or mixtures thereof,
where
R independently at each occurrence is a monovalent, unsubstituted or substituted C₁-C₁₃ hydrocarbon radical,
R¹ is a hydrogen atom or an unsubstituted or substituted C₁-C₁₃ hydrocarbon radical,
R² independently at each occurrence is a monovalent, unsubstituted or substituted C₁-C₁₃ hydrocarbon radical,
m is 0 or an integer of at least 1 to 3 and
n is an integer of at least 3 to 1000,
**characterized in that** the sil(ox)anols of the general formula (III) employed possess a water content of below 1% by weight and **in that** the catalyst used is an alkaline earth metal carbonate, alkali metal carbonate, alkaline earth metal oxide, alkali metal oxide or a mixture of at least two of these compounds.

2. Process according to Claim 1, **characterized in that** the catalyst used is an alkali metal carbonate or alkaline earth metal carbonate attached to a support material.

3. Process according to any one of Claims 1 or 2, **characterized in that** the catalyst is employed in dried form.

4. Process according to any one of Claims 1 to 3, **characterized in that** the hexaorganocyclotrisiloxane of the general formula (II) is used in amounts of 1 to 333 mol.

5. Process according to any one of Claims 1 to 4, **characterized in that** the hexaorganocyclotrisiloxane of the general formula (II) used is hexamethylcyclotrisiloxane.

6. Process according to any one of Claims 1 to 5, **characterized in that** the further additive used is a polar, aprotic organic solvent.

7. Process according to any one of Claims 1 to 6, **characterized in that** the catalyst is removed by filtration in order to end the reaction.

8. Process according to any one of Claims 1 to 7, **characterized in that** an inorganic lithium compound is added as cocatalyst.

## Revendications

1. Procédé pour la préparation de diorgano(poly)-siloxanes de formule générale (I)
R¹R₂Si (OSiR₂)ₘ(OSiR²₂)ₙOH (I) ,
par mise en réaction d'un hexaorganocyclotrisiloxane de formule générale (II)
(R²₂SiO)₃ (II)
avec un sil(ox)anol de formule générale (III)
R¹R₂Si(OSiR₂)ₘ(OH) (III)
en présence d'un catalyseur et
éventuellement d'autres additifs, choisis dans le groupe comprenant des desséchants, des solvants, des catalyseurs de transfert de phase, des composés lithiés ou des mélanges de ceux-ci,
R représentant, chaque fois indépendamment, un radical hydrocarboné monovalent en C₁-C₁₃ éventuellement substitué,
R¹ représentant un atome d'hydrogène ou un radical hydrocarboné en C₁-C₁₃ éventuellement substitué
R² représentant, chaque fois indépendamment, un radical hydrocarboné monovalent en C₁-C₁₃ éventuellement substitué,
m représentant 0 ou un nombre entier allant d'au moins 1 à 3 et
n représentant un nombre entier allant d'au moins 3 à 1 000,
**caractérisé en ce que** les sil(ox)anols utilisés de formule générale (III) ont une teneur en eau inférieure à 1 % en poids et **en ce qu'**on utilise comme catalyseur un carbonate de métal alcalin ou alcalino-terreux, un oxyde de métal alcalin ou alcalino-terreux ou un mélange d'au moins deux de ces composés.

2. Procédé selon la revendication 1, **caractérisé en ce qu'**on utilise comme catalyseur un carbonate de métal alcalin ou alcalino-terreux fixé sur une matière de support.

3. Procédé selon la revendication 1 ou 2, **caractérisé en ce que** le catalyseur est utilisé sous forme séchée.

4. Procédé selon l'une quelconque des revendications 1 à 3, **caractérisé en ce que** l'hexaorganocyclotrisiloxane de formule générale (II) est utilisé en quantités de 1 à 333 moles.

5. Procédé selon l'une quelconque des revendications 1 à 4, **caractérisé en ce qu'**on utilise en tant qu'hexaorganocyclotrisiloxane de formule générale (II) de l'hexaméthylcyclotrisiloxane.

6. Procédé selon l'une quelconque des revendications 1 à 5, **caractérisé en ce qu'**on utilise comme autre additif un solvant organique aprotique polaire.

7. Procédé selon l'une quelconque des revendications 1 à 6, **caractérisé en ce qu'**à la fin de la réaction le catalyseur est séparé par filtration.

8. Procédé selon l'une quelconque des revendications 1 à 7, **caractérisé en ce qu'**on ajoute un composé lithié inorganique en tant que co-catalyseur.
